# EUROPEAN PATENT SPECIFICATION

(11) **EP 3 285 918 B1**
(45) Date of publication and mention of the grant of the patent: **07.08.2019**
(21) Application number: 16707138.0
(22) Date of filing: 01.03.2016
(51) Int. Cl.: B01J 13/16, A01N 25/28

(54) **AGROFORMULATION OF MICROCAPSULES WITH SULFONATE AND CODISPERSANT**
AGROFORMULIERUNG VON MIKROKAPSELN MIT SULFONAT- UND CO-DISPERGIERMITTEL
AGROFORMULATION DE MICROCAPSULES AVEC DU SULFONATE ET DU CODISPERSANT

(30) Priority: 23.04.2015 EP 15164755
(43) Date of publication of application: 28.02.2018
(73) Proprietor: BASF SE, 67056 Ludwigshafen am Rhein (DE)
(72) Inventor: STEINBRENNER, Ulrich, 67435 Neustadt (DE); VOLLAND, Thorsten, 67165 Waldsee (DE); GRUBER, Angelika, 67105 Schifferstadt (DE); SHBAITA, Haytham, Beijing 100125 (CN); SIMON, Anja, Weinheim 69469 (DE); ASHER, Brady, Pittsboro, 27312 (US); ZAWIERUCHA, Joseph, Cary, 27519 (US); BOWE, Steven Joseph, Apex, 27523 (US)
(74) Representative: BASF IP Association
(86) International application number: PCT/EP2016/054340
(87) International publication number: WO 2016/169683

(56) References cited:
- EP-A1- 1 840 145
- WO-A1-00/05952
- WO-A1-2010/070096
- WO-A1-2010/124705
- WO-A2-2010/093970
- GB-A- 2 498 146
- US-A1- 2013 109 569
- DATABASE WPI Week 201216 Thomson Scientific, London, GB; AN 2011-J74462 XP002743760, -& CN 102 100 229 A (NANTONG LIANNONG PESTICIDE PREPARATION) 22 June 2011 (2011-06-22)
- DATABASE WPI Week 201079 Thomson Scientific, London, GB; AN 2010-M44235 XP002743761, -& CN 101 743 960 A (WU X) 23 June 2010 (2010-06-23)

## Description

The present invention relates to an aqueous composition comprising in the aqueous phase microcapsules, which comprise a shell and a core, where the core contains a pesticide; sulfonate; and a codispersant of the formula (I) as defined below. The invention further relates to a method of preparing said composition by synthesizing the microcapsules in the aqueous phase in the presence of the sulfonate and the codispersant. Finally, the invention relates to a method of controlling phytopathogenic fungi and/or undesired plant growth and/or undesired insect or mite attack and/or for regulating the growth of plants, wherein said composition is allowed to act on the respective pests, their environment or the crop plants to be protected from the respective pest, on the soil and/or on undesired plants and/or on the crop plants and/or on their environment; and to seed containing said composition. The preferred embodiments of the invention mentioned herein below have to be understood as being preferred either independently from each other or in combination with one another.

Aqueous agroformulations of pesticidal microcapsules are very useful products in crop protection.

WO2010/070096 discloses in Example I.1 pendimethalin microcapsules stock suspension comprising sodium lignosulfonate and as suspending aid Morwet® D425, a naphthalenesulfonic acid formaldehyde condensation product.

EP 1 840 145 A1 discloses a method of preparing a composition by synthesizing microcapsules in water in the presence of a lignosulfonate and a dispersant. The dispersant of D1 is an ethoxylated alcohol, an ethoxy and/or propoxy block copolymer, polyvinyl alcohol, polyvinyl pyrrolidone or a derivative or graft copolymer of said compounds. The composition is an aqueous composition comprising in the aqueous phase microcapsules comprising a core containing clomazone, lignosulfonate and a dispersant being an ethoxylated alcohol, an ethoxy and/or propoxy block copolymer, polyvinyl alcohol, polyvinyl pyrrolidone or a derivative or graft copolymer of said compounds. The composition is used as a pesticide by allowing said composition to act on the soil.

It is an ongoing challenge to identify new formulations with improved properties.

Object of the present invention was to overcome the problems of the state of the art. The object was solved by an aqueous composition comprising in the aqueous phase
- microcapsules, which comprise a shell and a core, where the core contains a pesticide;
- a sulfonate selected from lignosulfonate, naphthalene sulfonate formaldehyde condensate, or mixtures thereof; and
- a codispersant of the formula (I)

   R¹-O-(CₙH₂ₙO)ₓ-(CₘH₂ₘO)_{y}-X (I)

   in which
   - R¹: is a C₆-C₁₈ unit;
   - X: is -P(O)(R^{a})(OH), -CH₂-CH₂-PO₃H₂, -CH₂-CH₂-CO₂H, -SO₃H, -CH₂-CH₂-CH₂-SO₃H, or salts thereof;
   - R^{a}: is R¹-O-(CₙH₂ₙO)ₓ-(CₘH₂ₘO)_{y}- or OH;
   - n, m: independently of one another are a value of from 2 to 6;
   - x, y: independently of one another are a value of from 0 to 100; and
   - x+y: gives a value of from 1 to 100.

The **aqueous** composition may comprise at least 15 wt%, preferably at least 25 wt%, and in particular at least 35 wt% water. The composition is usually a liquid at 20 °C.

The composition comprises an aqueous phase, which is usually a continuous aqueous phase. The composition may comprise at least one further phase, such as at least one a discontinuous solid phase (e.g. the microcapsules, or suspended pesticide particles).

The composition comprises in the aqueous phase the microcapsules, the sulfonate (e.g. lignosulfonate) and the codispersant. Typically, the composition comprises in the continuous aqueous phase the microcapsules in form of as discontinuous phase, such as suspended microcapsules. Typically, the composition comprises in the continuous aqueous phase the sulfonate in dissolved form. Typically, the composition comprises in the continuous aqueous phase the codispersant in dissolved form.

**R¹** is usually a monovalent C₆-C₁₈ alkyl, C₆-C₁₈ aryl or C₆-C₁₈ alkyaryl, where C₆-C₁₈ alkyl is preferred. The alkyl groups may be linear or branched, saturated or unsaturated. Typically, R¹ is a hydrocarbon (i.e. it is free of heteroatoms). Mixtures of different groups are also possible, such as mixtures of different alkyl chain lenghts, and/or of saturated and unsaturated groups.

Examples for R¹ being C₆-C₁₈ aryl are phenyl or naphthyl.

Examples for R¹ being C₆-C₁₈ alkyaryl are C₁-C₁₂ alkylphenyl or C₁-C₈ naphthyl.

Preferably, R¹ is a linear or branched, saturated or unsaturated C₆-C₁₈ alkyl, wherein C₈-C₁₆ alkyl is more preferred. In particular, R¹ is linear or branched, saturated C₁₀-C₁₆ alkyl. Typical examples for R¹ are linear or branched decyl, undecyl, dodecyl, tridecyl, tetradecyl, hexadecyl, heptadecyl and octadecyl, or mixture of the aforementioned residues.

**X** is preferably -P(O)(R^{a})(OH), CH₂-CH₂-CH₂-SO₃H, -SO₃H, or salts thereof. More preferably, X is-P(O)(R^{a})(OH), -SO₃H, or salts thereof; wherein -P(O)(R^{a})(OH) or salts therof are more preferred.

**R^{a}** is R¹-O-(CₙH₂ₙO)ₓ-(CₘH₂ₘO)_{y}- or -OH. Mixtures thereof are also possible. In one form Ra is - OH. In another form R^{a} is R¹-O-(CₙH₂ₙO)ₓ-(CₘH₂ₘO)_{y}-.

The indices **n and m** are preferably independently of one another a value from 2 to 5, especially preferably 2 to 4 and in particular 2 or 3. The indices n and m usually are different values. The indices n and m usually are values that are integers.

The indices **x and y** are preferably independently of one another a value from 0 to 70, especially preferably a value from 0 to 50 and in particular a value of from 0 to 40.

The **sum of x+y** preferably gives a value from 3 to 70, especially preferably from 5 to 50 and in particular from 10 to 40.

In a form n and m are independently of one another are a value of from 2 or 3; x and y are independently of one another are a value of from 0 to 50; and x+y gives a value of from 5 to 50.

In a form n is 2 and m is 3; x is a value of from 1 to 50 and y is a value from 0 to 20; and x+y gives a value of from 5 to 50.

Within the unit "R¹-O-(CₙH₂ₙO)ₓ-(CₘH₂ₘO)_{y}-" the alkoxy units "(CₙH₂ₙO)ₓ" and "(CₘH₂ₘO)_{y}" may occur in any order, for example randomly distributed or blockwise (such as A-B or A-B-A).

The composition may comprise from 0,05 to 15 wt%, preferably from 0,1 to 5 wt%, and in particular from 0,3 to 3 wt% of the codispersant.

In another form R¹ is a linear or branched, saturated or unsaturated C₆-C₁₈ alkyl; X
is -P(O)(R^{a})(OH), -SO₃H, or salts therof; R^{a} is R¹-O-(CₙH₂ₙO)ₓ-(CₘH₂ₘO)_{y}- or -OH; n and m are independently of one another are a value of from 2 or 3; x and y are independently of one another are a value of from 0 to 50; and x+y gives a value of from 5 to 50.

In another form R¹ is linear or branched, saturated C₁₀-Cₗ₆ alkyl; X is -P(O)(R^{a})(OH), -SO₃H, or salts therof; R^{a} is R¹-O-(CₙH₂ₙO)ₓ-(CₘH₂ₘO)_{y}- or -OH; n is 2 and m is 3; x is a value of from 1 to 50 and y is a value from 0 to 20; and x+y gives a value of from 5 to 50.

The codispersant of formula (I) may be present in protonated form, e.g. where X
is -P(O)(R^{a})(OH), -CH₂-CH₂-PO₃H₂, -CH₂-CH₂-CO₂H, -SO₃H, or -CH₂-CH₂-CH₂-SO₃H. It is understood that depending on the pH of the aqueous composition the protonated form may partially be deprotonated and form a salt. The **salt form** of the codispersant is also encompassed within formula (I). Suitable salt forms of the codispersant are alkali metal salts and/or alkaline earth metal salts and/or ammonium salts, for example the ammonium, sodium, potassium, calcium or magnesium salts. The sodium and potassium salts are prefered.

The codispersant is usually soluble in water, e.g. at 20 °C, to at least 10 g/l, preferably at least 50 g/l and in particular at least 100 g/l.

The **sulfonate** is selected from lignosulfonate, naphthalene sulfonate formaldehyde condensate, or mixtures thereof. Preferably, the sulfonate is selected from lignosulfonate or mixtures of lignosulfonate and naphthalene sulfonate formaldehyde condensate. In particular, the sulfonate is lignosulfonate.

**Lignosulfonates** are known and are defined, for example, in Roempp's dictionary of chemistry, 9th Edition, volume 3, Georg-Thieme Verlag, Stuttgart, New York 1990, page 2511. Lignosulfonates which are suitable are the alkali metal salts and/or alkaline earth metal salts and/or ammonium salts, for example the ammonium, sodium, potassium, calcium or magnesium salts of lignosulfonic acid. The sodium, potassium or calcium salts are preferably used, the sodium, potassium and/or calcium salts are very particularly preferably used. Naturally, the term lignosulfonates also encompasses mixed salts of different ions, such as potassium/sodium lignosulfonate, potassium/calcium lignosulfonate and the like, in particular sodium/calcium lignosulfonate.

The molecular mass of the lignosulfonate may vary from 500 to 200,000 Da. Preferably, the lignosulfonate has a molecular weight of 700 to 50,000 Da, more preferably from 900 to 20,000 Da, and in particular from 1000 to 10,000 Da.

The lignosulfonate is usually soluble in water (e.g. at 20 °C), e.g. at least 5 wt%, preferably at least 10 wt%, and in particular at least 20 wt%.

**Naphthalene sulfonate formaldehyde condensates** are oligomers obtainable by reaction (e.g. polycondensation) of naphthalene sulfonate and formaldehyde. The naphthalene sulfonate formaldehyde condensates has usually a molecular mass of 300 to 10,000 Da, preferably of 500 to 5000 Da, and in particular of 500 to 2500 Da. The naphthalene group may optionally substituted by a linear or branched C₁-C₈ alkyl. The naphthalene sulfonate formaldehyde condensates is usually soluble in water (e.g. at 20 °C), e.g. at least 5 wt%, preferably at least 10 wt%, and in particular at least 20 wt%. Naphthalene sulfonate formaldehyde condensates which are suitable are the alkali metal salts and/or alkaline earth metal salts and/or ammonium salts, for example the ammonium, sodium, potassium, calcium or magnesium salts of lignosulfonic acid. The sodium, potassium or calcium salts are preferably used, the sodium, potassium and/or calcium salts are very particularly preferably used.

The composition may comprise from 0,05 to 15 wt%, preferably from 0,1 to 5 wt%, and in particular from 0,3 to 3 wt% of the sufonate (e.g. the lignosulfonate).

The weight ratio of the sufonate (e.g. the lignosulfonate) to the codispersant may vary from 8:1 to 1:8, preferably from 4:1 to 1:4, and in particular from 2,5:1 to 1:1,5.

The **microcapsules** comprise a shell and a core, where the core contains a pesticide.

The **core** comprises the pesticide, and preferably also a solvent. The pesticide may be present in the core in dissolved form, as suspension, emulsion or suspoemulsion. Preferably, the pesticide is present in dissolved form. The core usually contains at least 10 wt%, preferably at least 30 wt% and in particular at least 50 wt% of the pesticide, based on the total amount of the core materials. The core may contain up to 100 wt%, preferably up to 70 wt% of the pesticide. The amount of core materials is typically summed up from the amounts of all pesticides and any solvents in the core.

The core of the microcapsules optionally comprises a **solvent**, preferably a water-immiscible solvent. Preferably, the solvent has a solubility in water of up to 20 g/l at 20 °C, more preferably of up to 5 g/l and in particular of up to 0.5 g/l. Usually, the solvent has a boiling point above 100°C, preferably above 150 °C, and in particular above 180 °C (at 1 bar). "Solvent" in this case means that the solvent is able to form a homogeneous mixture with the pesticide or dissolve it. Examples for suitable organic solvents are mineral oil fractions of medium to high boiling point, such as kerosene or diesel oil, furthermore coal tar oils and oils of vegetable or animal origin, fatty acid glycerides or their methyl or ethyl ester derivatives, commonly called methyl- or ethyl oleate, aliphatic, cyclic and aromatic hydrocarbons, e. g. toluene, xylene, paraffin, tetrahydronaphthalene, alkylated naphthalenes or their derivatives. Mixtures of organic solvents may also be used. Preferred organic solvents are fatty acid glycerides or their methyl or ethyl ester derivatives, and/or a hydrocarbons.

The core may optionally contain **auxiliaries**, such as those mentioned below. Preferably, the core contains at least one adjuvant (for example organic modified polysiloxanes such as Break Thru S 240®; alcohol alkoxylates such as Atplus® 245, Atplus® MBA 1303, Plurafac® LF 300 and Lutensol® ON 30; EO/PO block polymers, Poloxamers, e. g. Pluronic® RPE 2035 and Genapol® B; alcohol ethoxylates such as Lutensol® XP 80; and dioctyl sulfosuccinate sodium such as Leophen® RA).

The weight ratio of the pesticide in the core (or of the sum of all pesticides in case more than one is present in the core) to the sum of all solvents in the core is typically from 5 : 1 to 1 : 10, preferably from 3 : 1 to 1 : 2, more preferably from 2 : 1 to 1 : 1.

The **microcapsules** comprises a shell, which may be made of any known shell material (e.g. polyacrylates, polystyrenes, melamin formaldehyde condensates and polyaddition products of isocyanates, in particular polyureas). Preferably, the shell is a polyurea shell or poly(meth)acrylate shell. In particular, the shell is a polyurea shell.

**Poly(meth)acrylate** is a known shell material for microcapsules, for example from WO 2008/071649, EP 0 457154 or DE 10 2007 055 813. Usually, the poly(meth)acrylate comprises C₁-C₂₄ alkyl esters of acrylic and/or methacrylic acid, acrylic acid, methacrylic acid, and/or maleic acid in polymerized form. More preferably, the poly(meth)acrylate comprises methyl methacrylate and methacrylic acid. The poly(meth)acrylate may also comprise in polymerized form one or more difunctional or polyfunctional monomers. The poly(meth)acrylate may further comprise other monomers.

More preferrably, the poly(meth)acrylate polymer is synthesized from

| | |
|---|---|
| 30 to 100 wt%, | based on the total weight of the monomers, of one or more monomers (monomers I) from the group comprising C₁-C₂₄ alkyl esters of acrylic and/or methacrylic acid, acrylic acid, methacrylic acid, and maleic acid, |
| 10 to 70 wt%, | based on the total weight of the monomers, of one or more difunctional or polyfunctional monomers (monomers II), and |
| 0 to 40 wt%, | based on the total weight of the monomers, of one or more other monomers (monomers III). |

The poly(meth)acrylate of the **capsule wall** comprise generally at least 30%, in a preferred form at least 40%, in a particularly preferred form at least 50%, more particularly at least 60%, with very particular preference at least 70%, and also up to 100%, preferably not more than 90%, more particularly not more than 85%, and, with very particular preference, not more than 80%, by weight, of at least one monomer from the group comprising C₁-C₂₄ alkyl esters of acrylic and/or methacrylic acid, acrylic acid, methacrylic acid, and maleic acid (**monomers** I), in copolymerized form, based on the total weight of the monomers.

Furthermore the poly(meth)acrylate of the capsule wall comprises preferably at least 10%, preferably at least 15%, preferentially at least 20%, and also, in general, not more than 70%, preferably not more than 60%, and with particular preference not more than 50%, by weight, of one or more difunctional or polyfunctional monomers (**monomers II**), in copolymerized form, based on the total weight of the monomers. In another preferred embodiment, the poly(meth)acrylate of the capsule wall comprises preferably at least 10%, preferably at least 15%, and also, in general, not more than 50%, preferably not more than 40% by weight, of one or more polyfunctional monomers (monomers II), in copolymerized form, based on the total weight of the monomers.

Additionally, the poly(meth)acrylate may comprise up to 40%, preferably up to 30%, more particularly up to 20%, by weight, of other **monomers III**, in copolymerized form. The capsule wall is preferably synthesized only from monomers of groups I and II.

Suitable **monomers I** are C₁-C₂₄ alkyl esters of acrylic and/or methacrylic acid and also the unsaturated C₃ and C₄ carboxylic acids such as acrylic acid, methacrylic acid, and also maleic acid. Suitable monomers I are isopropyl, isobutyl, sec-butyl, and tert-butyl acrylates and the corresponding methacrylates, and also, with particular preference, methyl, ethyl, n-propyl, and n-butyl acrylates and the corresponding methacrylates. In general the methacrylates and methacrylic acid are preferred.

According to one preferred embodiment the microcapsule walls comprise 25% to 75% by weight of maleic acid, methacrylic acid and/or acrylic acid, more particularly methacrylic acid, based on the total amount of the monomers I, in copolymerized form.

Suitable **monomers II** are difunctional or polyfunctional monomers. By difunctional or polyfunctional monomers are meant compounds which have at least two nonconjugated ethylenic double bonds. Contemplated primarily are divinyl monomers and polyvinyl monomers. They bring about crosslinking of the capsule wall during the polymerization. In another preferred embodiment, suitable monomers II are polyfunctional monomers.

Suitable **divinyl monomers** are divinylbenzene and divinylcyclohexane. Preferred divinyl monomers are the diesters of diols with acrylic acid or methacrylic acid, and also the diallyl and divinyl ethers of these diols. Mention may be made, by way of example, of ethanediol diacrylate, ethylene glycol dimethacrylate, 1,3-butylene glycol dimethacrylate, methallylmethacrylamide, allyl acrylate, and allyl methacrylate. Particular preference is given to propanediol, 1,4-butanediol, pentanediol, and hexanediol diacrylates and the corresponding methacrylates.

Preferred **polyvinyl monomers** are the polyesters of polyols with acrylic acid and/or methacrylic acid, and also the polyallyl and polyvinyl ethers of these polyols, trivinylbenzene and trivinylcyclohexane. Particular preference is given to trimethylolpropane triacrylate and trimethacrylate, pentaerythritol triallyl ether, pentaerythritol tetraallyl ether, pentaerythritol triacrylate, and pentaerythritol tetraacrylate, and also their technical mixtures.

**Monomers III** contemplated are other monomers, different than the mononers I and II, such as vinyl acetate, vinyl propionate, vinylpyridine, and styrene or α-methylstyrene. Particular preference is given to itaconic acid, vinylphosphonic acid, maleic anhydride, 2-hydroxyethyl acrylate and methacrylate, acrylamido-2-methylpropanesulfonic acid, methacrylonitrile, acrylonitrile, methacrylamide, N-vinylpyrrolidone, N-methylolacrylamide, N-methylolmethacrylamide, dimethylaminoethyl methacrylate, and diethylaminoethyl methacrylate.

**Polyurea** is also a known shell material for microcapsules. They are preferably prepared by an interfacial polymerization process of a suitable polymer wall forming material, such as a polyisocyanate and a polyamine. Interfacial polymerization is usually performed in an aqueous oil-in-water emulsion or suspension of the core material containing dissolved therein at least one part of the polymer wall forming material. During the polymerization, the polymer segregates from the core material to the boundary surface between the core material and water thereby forming the wall of the microcapsule. Thereby an aqueous suspension of the microcapsule material is obtained.

In general, polyurea is formed by reacting a **polyisocyanate** having at least two isocyanate groups with a polyamine having at least two primary amino groups to form a polyurea wall material. However, preferred is if either the polyisocyanate or the polyamine or both have more than two reactive - NCO- or NH-groups, respectively. In a further embodiment, the polyurea may be formed by contacting polyisocyanate with water. Also, and preferably, the polyurea results from a reaction of polyisocyanate with both polyamine and water. Preferably, the polyurea shell contains a polyisocyanate and a polyamine in polycondensed form. Suitable polyisocyanates are known, e.g. from US 2010/0248963 A1, paragraphs [0135] to [0158], to which full reference is made. Suitable polyamines are known, e.g. from US 2010/0248963 A1, paragraphs [0159] to [0169], to which full reference is made.

Polyisocyanates may be used individually or as mixtures of two or more polyisocyanates. Suitable polyisocyanates are for example aliphatic isocyanates or aromatic isocyanates. These isocyanates may be present as monomeric or oligomeric isocyanates. The NCO content may be deteremined according to ASTM D 5155-96 A.

Examples of suitable **aliphatic diisocyanates** include tetramethylene diisocyanate, pentamethylene diisocyanate and hexamethylene diisocyanate as well as cycloaliphatic isocycantates such as isophoronediisocyanate, 1,4-bisisocyanatocyclohexane and bis-(4-isocyanatocyclohexyl)methane.

Suitable **aromatic isocyanates** include toluene diisocyanates (TDI: a mixture of the 2,4- and 2,6-isomers), diphenylmethene-4,4'-diisocyanate (MDI), polymethylene polyphenyl isocyanate, 2,4,4'-diphenyl ether triisocyanate, 3,3'-dimethyl-4,4'-diphenyl diisocyanate, 3,3'-dimethoxy-4,4'-diphenyl diisocyanate, 1,5-naphthylene diisocyanate and 4,4',4"-triphenylmethane triisocyanate. Also suitable are higher oligomers of the aforementiende diisocyanates such as the isocyanurates and biurethes of the aforementioned diisocyanates and mixtures thereof with the aforementioned diisocyanates.

In another preferred embodiment, the polyisocyanate is an **oligomeric isocyanates**, preferably an aromatic, oligomeric isocyanate. Such oligomeric isocyanates may comprise above mentioned aliphatic diisocyanates and/or aromatic isocyanates in oligomerized form. The oligomeric isocyanates have an average functionality in the range of 2,0 to 4,0, preferably 2,1 to 3,2, an more preferably 2,3 to 3,0. Typically, these oligomeric isocyanates have a viscosity (determined according to DIN 53018) in the range from 20 to 1000 mPas, more preferably from 80 to 500 mPas and especially from 150 to 320 mPas. Such oligomeric isocyanates are commercially available, for example from BASF SE under the tradenames Lupranat® M10, Lupranat® M20, Lupranat® M50, Lupranat® M70, Lupranat® M200, Lupranat® MM103 or from Bayer AG as Basonat® A270.

Also suitable are adducts of diisocyanates with polyhydric alcohols, such as ethylene glycol, glycerol and trimethylolpropane, obtained by addition, per mole of polyhydric alcohol, of a number of moles of diisocyanate corresponding to the number of hydroxyl groups of the respective alcohol and mixtures thereof with the aforementioned diisocyanates. In this way, several molecules of diisocyanate are linked through urethane groups to the polyhydric alcohol to form high molecular weight polyisocyanates. A particularly suitable product of this kind, DESMODUR® L (Bayer Corp., Pittsburgh), can be prepared by reacting three moles of toluene diisocyanate with one mole of 2-ethylglycerol (1,1-bismethylolpropane). Further suitable products are obtained by addi-tion of hexamethylene diisocyanate or isophorone diisocyanate with ethylene glycol or glycerol.

Preferred polyisocyanates are isophorone diisocyanate, diphenylmethane-4,4'-diisocyanate, toluene diisocyanates, and oligomeric isocyanates, whereas oligomeric isocyanates are in particular preferred.

Suitable **polyamines** within the scope of this invention will be understood as meaning in general those compounds that contain two and more amino groups in the molecule, which amino groups may be linked to aliphatic or aromatic moieties.

Examples of suitable **aliphatic polyamines** are α,ω-diamines of the formula H₂N-(CH₂)ₚ-NH₂, wherein p is an integer from 2 to 6. Exemplary of such diamines are ethylene diamine, propylene-1,3-diamine, tetramethylene diamine, pentamethylene diamine and hexamethylene diamine. A preferred diamine is hexamethylene diamine. Further suitable aliphatic polyamines are polyethylenimines of the formula H₂N-(CH₂-CH₂-NH)_{q}-H, wherein q is an integer from 2 to 20, preferably 3 to 5. Representative examples of such polyethylenimines are diethylene triamine, triethylene tetramine, tetraethylene pentamine and pentaethylene hexamine. Further suitable aliphatic polyamines are dioxaalkane-α,ω-diamines, such as 4,9-dioxadodecane-1,12-diamine of the formula H₂N-(CH₂)₃O-(CH₂)₄O-(CH₂)₃-NH₂.

Examples of suitable **aromatic polyamines** are 1,3-phenylene diamine, 2,4- and 2,6-toluene diamine, 4,4'-diaminodiphenyl methane, 1,5-diaminonaphthalene, 1,3,5-triaminobenzene, 2,4,6-triaminotoluene, 1,3,6-triaminonaphthalene, 2,4,4'-triaminodiphenyl ether, 3,4,5-triamino-1,2,4-triazole and 1,4,5,8-tetraaminoanthraquinone. Those polyamines which are insoluble or insufficiently soluble in water may be used as their hydrochloride salts.

Polyamines, such as those mentioned above may be used individually or as mixtures of two or more polyamines. Preferred polyamine is a polyethylenimine, such as tetraethylene pentamine.

The relative **amounts** of each complementary wall-forming component will vary with their equivalent weights. In general, approximately stoichiometric amounts are preferred, while an excess of one component may also be employed, especially an excess of polyisocyanate. The total amount of wall-forming components approximately corresponds to the total amount of polymeric wall-forming materials.

The microcapsules contain up to 15 wt%, preferably up to 10 wt% and in particular up to 6 wt% of shell (e.g. based on the total amount of pesticide, all solvents in the core, polyisocyate, and polyamine). The microcapsules contain usually at least 0.5 wt%, preferably at least 1.5 wt% shell.

The average particle size D₅₀ of the microcapsules (determined according to ISO 13320, Particle Size Analysis - Laser Diffraction Methods, December, 1st, 2009) is 0.5 to 100 µm, preferably 1 to 20 µm, more preferably 1 to 12 µm, and especially 2 to 10 µm.

The aqueous composition contains usually from 1 to 90 wt% of the microcapsules, preferably from 3 to 80 wt%, and in particular 10 to 70 wt%.

The present invention furthermore relates to a method of preparing the aqueous composition according to the invention by **synthesizing the microcapsules** in the aqueous phase in the presence of the sulfonate (e.g. lignosulfonate) and the codispersant of the formula (I).

Preferably, in the method of preparing the composition the aqueous phase comprises in emulsified form the water-immiscible solvent.

Preferably, the microcapsules are synthesized by polycondensation of the polyisocyanate and the polyamine.

The term **pesticide** refers to at least one active substance selected from the group of the fungicides, insecticides, nematicides, herbicides, safeners, biopesticides and/or growth regulators. Preferred pesticides are fungicides, insecticides, herbicides and growth regulators. Especially preferred pesticides are fungicides. Mixtures of pesticides of two or more of the abovementioned classes may also be used. The skilled worker is familiar with such pesticides, which can be found, for example, in the Pesticide Manual, 16th Ed. (2013), The British Crop Protection Council, London. Suitable insecticides are insecticides from the class of the carbamates, organophosphates, organochlorine insecticides, phenylpyrazoles, pyrethroids, neonicotinoids, spinosins, avermectins, milbemycins, juvenile hormone analogs, alkyl halides, organotin compounds nereistoxin analogs, benzoylureas, diacylhydrazines, METI acarizides, and insecticides such as chloropicrin, pymetrozin, flonicamid, clofentezin, hexythiazox, etoxazole, diafenthiuron, propargite, tetradifon, chlorofenapyr, DNOC, buprofezine, cyromazine, amitraz, hydramethylnon, acequinocyl, fluacrypyrim, rotenone, or their derivatives. Suitable fungicides are fungicides from the classes of dinitroanilines, allylamines, anilinopyrimidines, antibiotics, aromatic hydrocarbons, benzenesulfonamides, benzimidazoles, benzisothiazoles, benzophenones, benzothiadiazoles, benzotriazines, benzyl carbamates, carbamates, carboxamides, carboxylic acid diamides, chloronitriles cyanoacetamide oximes, cyanoimidazoles, cyclopropanecarboxamides, dicarboximides, dihydrodioxazines, dinitrophenyl crotonates, dithiocarbamates, dithiolanes, ethylphosphonates, ethylaminothiazolecarboxamides, guanidines, hydroxy-(2-amino)pyrimidines, hydroxyanilides, imidazoles, imidazolinones, inorganic substances, isobenzofuranones, methoxyacrylates, methoxycarbamates, morpholines, N-phenylcarbamates, oxazolidinediones, oximinoacetates, oximinoacetamides, peptidylpyrimidine nucleosides, phenylacetamides, phenylamides, phenylpyrroles, phenylureas, phosphonates, phosphorothiolates, phthalamic acids, phthalimides, piperazines, piperidines, propionamides, pyridazinones, pyridines, pyridinylmethylbenzamides, pyrimidinamines, pyrimidines, pyrimidinonehydrazones, pyrroloquinolinones, quinazolinones, quinolines, quinones, sulfamides, sulfamoyltriazoles, thiazolecarboxamides, thiocarbamates, thiophanates, thiophenecarboxamides, toluamides, triphenyltin compounds, triazines, triazoles. Suitable herbicides are herbicides from the classes of the acetamides, amides, aryloxyphenoxypropionates, benzamides, benzofuran, benzoic acids, benzothiadiazinones, bipyridylium, carbamates, chloroacetamides, chlorocarboxylic acids, cyclohexanediones, dinitroanilines, dinitrophenol, diphenyl ether, glycines, imidazolinones, isoxazoles, isoxazolidinones, nitriles, N-phenylphthalimides, oxadiazoles, oxazolidinediones, oxyacetamides, phenoxycarboxylic acids, phenylcarbamates, phenylpyrazoles, phenylpyrazolines, phenylpyridazines, phosphinic acids, phosphoroamidates, phosphorodithioates, phthalamates, pyrazoles, pyridazinones, pyridines, pyridinecarboxylic acids, pyridinecarboxamides, pyrimidinediones, pyrimidinyl(thio)benzoates, quinolinecarboxylic acids, semicarbazones, sulfonylaminocarbonyltriazolinones, sulfonylureas, tetrazolinones, thiadiazoles, thiocarbamates, triazines, triazinones, triazoles, triazolinones, triazolocarboxamides, triazolopyrimidines, triketones, uracils, ureas. Mixturs of pesticides are also suitable.

Preferably, the pesticide is soluble in water up to 10 g/l, preferably up to 1 g/l, and in particular up to 0,5 g/l, at 20 °C. Mixturs of water soluble pesticides are also suitable.

In one form the pesticide is liquid at room temperature (e.g. 20 °C), like e.g. dimethenamide, dimethenamide-P, clomazone, S-metolachlor. In another form the pesticide also can have a melting point above room temperature, examples are pyraclostrobin 64 °C, prochloraz 47 °C, metrafenon 100 °C, alphacypermethrin 79 °C, pendimethalin 58°C. Mixturs of liquid pesticides are also suitable.

In another form the pesticide comprises dimethenamid and/or a benzoxazinones of formula I 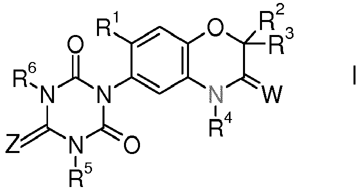 wherein
- R¹: is hydrogen or halogen;
- R²: is halogen;
- R³: is hydrogen or halogen;
- R⁴: is hydrogen, C₁-C₆-alkyl, C₁-C₆-haloalkyl, C₃-C₆-cycloalkyl, C₃-C₆-alkenyl, C₃-C₆-haloalkenyl, C₃-C₆-alkynyl, C₃-C₆-haloalkynyl, C₁-C₆-alkoxy or C₃-C₆-cycloalkyl-C₁-C₆-alkyl;
- R⁵: is hydrogen, NH₂, C₁-C₆-alkyl or C₃-C₆-alkynyl;
- R⁶: is hydrogen or C₁-C₆-alkyl; and
- W: is O or S;
- Z: is O or S.

According to a preferred embodiment the pesticide comprises dimethenamid and/or benzoxazinones of formula I, wherein the variables, either independently of one another or in combination with one another, have the following meanings:
- R¹: is hydrogen; is also preferably halogen, particularly preferred F or Cl, especially preferred F;
- R²: is F;
- R³: is hydrogen or F, preferably hydrogen; is also preferably F;
- R⁴: is C₃-C₆-alkynyl or C₃-C₆-halolkynyl, preferably C₃-alkynyl or C₃-halolkynyl, particularly preferred CH₂C≡CH, CH₂C≡CCl or CH₂C≡CBr; is also preferably C₃-C₆-alkynyl or C₃-C₆-cycloalkyl-C₁-C₆-alkyl, particularly preferred propargyl or cyclopropylmethyl; is also preferably C₃-C₆-alkynyl, preferably C₃-alkynyl; particularly preferred CH₂C≡CH; is also preferably C₃-C₆-halolkynyl, preferably C₃-halolkynyl, particularly preferred CH₂C≡CCl or CH₂C≡ CBr;
- R⁵: is NH₂, C₁-C₆-Alkyl or C₃-C₆-alkynyl; preferably C₁-C₆-alkyl; more preferably C₁-C₄-alkyl; most preferably CH₃;
- R⁶: is C₁-C₆-alkyl; preferably C₁-C₄-alkyl; most preferably CH₃;
- W: is O, is also preferably S;
- Z: is O, is also preferably S.

According to a particular preferred embodiment the pesticide comprises dimethenamid and/or a benzoxazinone herbicide of formula (A)

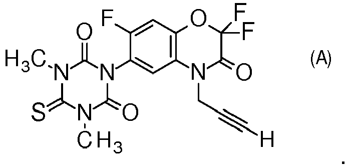

The present invention further relates to an aqueous composition comprising the microcapsules according to the invention. Preferably, this composition comprises a **non-encapsulated pesticide**. This non-encapsulated pesticide may be present in dissolved form, or as a suspension, emulsion or suspoemulsion. It may be identical or different to the pesticide in the core.

The aqueous composition contains usually at least 1 wt% encapsulated pesticide, preferably at least 3 wt% and in particular at least 10 wt%.

The aqueous composition contains usually at least 1 wt% non-encapsulated pesticide, preferably at least 3 wt% and in particular at least 10 wt%.

The aqueous compositions according to the invention may also comprise **auxiliaries** which are customary in agrochemical formulations. The auxiliaries used depend on the particular application form and active substance, respectively. Examples for suitable auxiliaries are dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e. g. for seed treatment formulations).

The auxiliaries are usually different from the sulfonate and the codispersant of the formula (I).

Examples for suitable **auxiliaries** are solvents, liquid carriers, solid carriers or fillers, surfactants, further dispersants, emulsifiers, wetters, further adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable **surfactants** are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable **nonionic** surfactants are alkoxylate surfactants, N-subsituted fatty acid amides, amine oxides, esters, sugar-based surfactants, polymeric surfactants, and mixtures thereof. Examples of alkoxylate surfactants are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable **cationic** surfactants are quaternary surfactants, for example quaternary ammonium compounds with one or two hydrophobic groups, or salts of long-chain primary amines. Suitable **amphoteric** surfactants are alkylbetains and imidazolines. Suitable **block polymers** are block polymers of the A-B or A-B-A type comprising blocks of polyethylene oxide and polypropylene oxide, or of the A-B-C type comprising alkanol, polyethylene oxide and polypropylene oxide. Suitable **polyelectrolytes** are polyacids or polybases. Examples of polyacids are alkali salts of polyacrylic acid or polyacid comb polymers. Examples of polybases are polyvinylamines or polyethyleneamines.

Suitable **further adjuvants** are compounds, which have a neglectable or even no pesticidal activity themselves, and which improve the biological performance of the pesticide on the target. Examples are surfactants, mineral or vegetable oils, and other auxilaries. Further examples are listed by Knowles, Adjuvants and additives, Agrow Reports DS256, T&F Informa UK, 2006, chapter 5.

Suitable **thickeners** are polysaccharides (e.g. xanthan gum, carboxymethylcellulose), anorganic clays (organically modified or unmodified), polycarboxylates, polyethers, isocyanate-linked polyethers, polyvinyl alcohols, and silicates.

Suitable **bactericides** are bronopol and isothiazolinone derivatives such as alkylisothiazolinones and benzisothiazolinones.

Suitable **anti-freezing agents** are ethylene glycol, propylene glycol, urea and glycerin.

Suitable **anti-foaming agents** are silicones, long chain alcohols, and salts of fatty acids.

Suitable **colorants** (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable **tackifiers or binders** are polyvinylpyrrolidons, polyvinylacetates, polyvinyl alcohols, polyacrylates, biological or synthetic waxes, and cellulose ethers.

The agrochemical compositions generally comprise between 0.01 and 95%, preferably between 0.1 and 90%, and most preferably between 0.5 and 75%, by **weight of active substance** (i.e. pesticide). The active substances are employed in a purity of from 90% to 100%, preferably from 95% to 100% (according to NMR spectrum).

When employed in plant protection, the **amounts of active substances applied** are, depending on the kind of effect desired, from 0.001 to 6 kg per ha, preferably from 0.005 to 2 kg per ha, more preferably from 0.05 to 0.9 kg per ha, in particular from 0.1 to 0.75 kg per ha.

In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seed) are generally required.

When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and other pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The concentration of the codispersant of the formula (I) in the ready-to-use preparation (e.g. the **tank mix**) is in most cases in the range of from 0.01 to 50 g/l, preferably 0.08 to 10 g/l and in particular 0.5 to 8 g/l.

The concentration of water in the ready-to-use preparation (e.g. the tank mix) is in most cases at least 60 wt%, preferably at least 75 wt%, and in particular at least 90 wt%.

The tank mix is usually an aqueous liquid, which is ready to be applied (e.g. by spraying) in the method of controlling phytopathogenic fungi and/or undesired vegetation and/or undesired insect or mite attack and/or for regulating the growth of plants.

The **user applies** the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, very preferably 50 to 200 liters of the ready-to-use spray liquor are applied per hectare of agricultural useful area.

In a further embodiment, either individual components of the composition according to the invention or partially **premixed** components, e. g. components comprising the pesticide and the adjuvant, may be mixed by the user in a spray tank and further auxiliaries and additives may be added, if appropriate. In a further embodiment, either individual components of the composition according to the invention or partially premixed components, e. g. components comprising the pesticide and/or the adjuvant can be **applied jointly** (e.g. after tank mix) or **consecutively**.

The present invention furthermore relates to a method of **controlling** phytopathogenic fungi and/or undesired plant growth and/or undesired insect or mite attack and/or for regulating the growth of plants, wherein the composition comprising the pesticide and the alkoxylate of the formula (I) according to the invention are allowed to act on the respective pests, their environment or the crop plants to be protected from the respective pest, on the soil and/or on undesired plants and/or on the crop plants and/or on their environment.

The present invention furthermore relates to a method of **controlling** phytopathogenic fungi and/or undesired plant growth and/or undesired insect or mite attack and/or for regulating the growth of plants, wherein a composition comprising a pesticide and the adjuvants of the formula (I) according to the invention are allowed to act on the respective pests, their environment or the crop plants to be protected from the respective pest, on the soil and/or on undesired plants and/or on the crop plants and/or on their environment.

Examples of suitable **crop plants** are cereals, for example wheat, rye, barley, triticale, oats or rice; beet, for example sugar or fodder beet; pome fruit, stone fruit and soft fruit, for example apples, pears, plums, peaches, almonds, cherries, strawberries, raspberries, currants or gooseberries; legumes, for example beans, lentils, peas, lucerne or soybeans; oil crops, for example oilseed rape, mustard, olives, sunflowers, coconut, cacao, castor beans, oil palm, peanuts or soybeans; cucurbits, for example pumpkins/squash, cucumbers or melons; fiber crops, for example cotton, flax, hemp or jute; citrus fruit, for example oranges, lemons, grapefruit or tangerines; vegetable plants, for example spinach, lettuce, asparagus, cabbages, carrots, onions, tomatoes, potatoes, pumpkin/squash or capsicums; plants of the laurel family, for example avocados, cinnamon or camphor; energy crops and industrial feedstock crops, for example maize, soybeans, wheat, oilseed rape, sugar cane or oil palm; maize; tobacco; nuts; coffee; tea; bananas; wine (dessert grapes and grapes for vinification); hops; grass, for example turf; sweetleaf (*Stevia rebaudania*); rubber plants and forest plants, for example flowers, shrubs, deciduous trees and coniferous trees, and propagation material, for example seeds, and harvested produce of these plants.

The term crop plants also includes those plants which have been modified by breeding, mutagenesis or recombinant methods, including the biotechnological agricultural products which are on the market or in the process of being developed. Genetically modified plants are plants whose genetic material has been modified in a manner which does not occur under natural conditions by hybridizing, mutations or natural recombination (i.e. recombination of the genetic material). Here, one or more genes will, as a rule, be integrated into the genetic material of the plant in order to improve the plant's properties. Such recombinant modifications also comprise posttranslational modifications of proteins, oligo- or polypeptides, for example by means of glycosylation or binding polymers such as, for example, prenylated, acetylated or farnesylated residues or PEG residues.

The present invention also relates to seed (such as seeds or other plant propagation materials) comprising the composition according to the invention. Plant propagation materials can be treated preventively with the composition according to the invention at the point of or even before sowing or at the point of or even before transplanting. For the treatment of seed, one will generally use water-soluble concentrates (LS), suspensions (FS), dusts (DS), water-dispersible and water-soluble powders (WS, SS), emulsions (ES), emulsifiable concentrates (EC) and gels (GF). These compositions can be applied to the propagation materials, in particular seed, in undiluted form or, preferably, in diluted form. Here, the composition in question can be diluted 2- to 10-fold, so that from 0.01 to 60% by weight, preferably from 0.1 to 40% by weight, of active substance is present in the compositions used for the seed dressing. The application may be effected before or during sowing. The treatment of plant propagation material, in particular the treatment of seed, is known to the skilled worker and carried out by dusting, coating, pelleting, dipping or soaking the plant propagation material, the treatment preferably being carried out by pelleting, coating and dusting or by in-furrow treatment so that, for example, untimely early germination of the seed is prevented. It is preferred to use suspensions for the treatment of seed. Usually, such compositions comprise from 1 to 800 g/l of active substance, from 1 to 200 g/l of surfactants, from 0 to 200 g/l of antifreeze agents, from 0 to 400 g/l of binders, from 0 to 200 g/l of colorants and solvent, preferably water.

The present invention further relates to a use of the alkoxylate of the formula (I) according to the invention for improving the efficacy of the pesticide. Usually, the efficacy is improved compared to the same use of the pesticide without the alkoxylate of the formula (I).

The **advantages** of the invention are that the average particle size D₅₀ of the microcapsules can be very low; that the average particle size D₅₀ of the microcapsules can be very narrow; that the average particle size D₅₀ of the microcapsules can be very low and narrow; that when the microcapsules are synthesized in the aqueous phase a high percentage of the pesticides is encapsulated; that the pesticides is released over a long period.

The examples which follow illustrate the invention without imposing any limitation.

### Examples

| | |
|---|---|
| Lignosulfonate A: | sodium lignine sulfonate, powder, soluble in water, average molecular weight 2700-3100 Da, total sulfur about 10-11 %. |
| Wetting Agent: | alkyl naphthalenesulfonic acid condensate, sodium, 30% in water. |
| Pesticide A: | Benzoxazinone herbicide of formula (A) 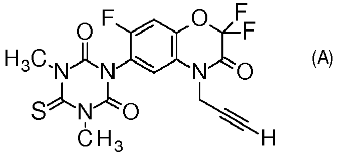 |
| Polyisocyanate A: | polyisocyanated based on 4,4'-diphenylmethane diisocyanate (MDI) containing oligomers of high functionality and isomers, solvent-free liquid, average functionality 2.7, NCO-content 32 g/100 g. |
| Biocide: | Mix of 2-methyl-4-isothiazolin-3-one and 1,2-benzisothiazolin-3-one. |
| Defoamer: | Silicone based defoamer. |
| Codispersant A: | codispersant of formula (I), where R¹ is C₁₀₋₁₆ alkyl; X is -P(O)(R^{a})(OH); R^{a} is R¹-O-(CₙH₂ₙO)ₓ-(CₘH₂ₘO)_{y}- or -OH; n is 2 and m is 3; x is about 10-15 and y is about 0 to 5; about 70-80 wt% in water, pH about 1-3. |
| Codispersant B: | codispersant of formula (I), where R¹ is C₁₂₋₁₄ alkyl; X is - SO₃Na; n is 2; x is about 25-35 and y is 0; sodium salt; about 30 wt% in water. |

### Example 1 (comparative, without codispersant)

Preparation of the water phase: To 1311g water were added 36g lignosulfonate, 18g Wetting Agent and the pH adjusted to about 11.5
Preparation of the oil phase: 1142g Dimethenamide-P was mixed with 300g corn oil and 72.5g Pesticide A. After a homogenous solution has been obtained, 47.7g Polyisocyanate A was added.

Preparation of the amine phase: A 25 w% solution of 1,6-hexamethylene diamine in water was prepared.

Finish solution: A slurry of 6g Biocide, 3g xanthan gum, 1.8g Defoamer in 200 g water was prepared.

Preparation of the emulsion and encapsulation: Above oil phase was added at 20-25°C to above water phase and emulsified using high-shear equipment. After emulsification, the emulsification device was replaced by a low shear stirrer and 72g of the amine phase was added. Subsequently, the dispersion was allowed to rest 30 minutes at room temperature. Under stirring the finish solution was added to the capsule dispersion and the pH adjusted to pH 6 by addition of acetic acid.

### Example 2 (comparative, codispersant Soprophor® FLK)

The sample was prepared as described in the Comparative Example 1, wherein 30 g of Soprophor® FLK were added when preparing the water phase.

### Example 3 (comparative, codispersant Morwet® D425)

The sample was prepared as described in the Comparative Example 1, wherein 30 g of Morwet® D425 were added when preparing the water phase.

During the encapsulation step a cheese-like solid matter formed which is not applicable.

### Example 4

The sample was prepared as described in the Comparative Example 1, wherein 30 g of Codispersant A were added when preparing the water phase.

### Example 5

The sample was prepared as described in the Comparative Example 1, wherein 30 g of Codispersant B were added when preparing the water phase.

### Example 6 - Particle size and free pesticide

The particle size distribution of samples from Examples 1-5 was determined by static laser scattering with a Malvern Mastersizer 2000 according to the European norm ISO 13320 EN. The data were treated according to the Mie-Theory by a software using a "universal model" provided by Malvern Instruments. Important parameters are the dₙ-values which denote the scattering diameter, below which n vol.-% are found. Relevant are the d-values for n=10, 50 and 90, the d₁₀, d₅₀, and d₉₀-values. The results were summarized in Table 1.

The amount of free pesticide, which was not encapsulated in the samples of Examples 1-5, was determined as follows: First, a 10 w% solution of poloxamer 335 (Pluronic® PE 10500) was prepared which was adjusted to pH 5 with acetic acid. This solution acted as receiver solution for non- or not well encapsulated droplets of the oil phase. To 250 ml of the receiver solution was added 125 mg of the microcapsule formulation and stirred for 10 minutes. Subsequently, a sample was drawn through a 0.2 µm Teflon filter to remove intact microcapsules. In the filtrate, the amount of Pesticide A was determined by reverse phase HPLC and normalized in a way that the entire amount of Pesticide A would account for 100% (= 100% "free herbicide", this is found, e.g., if no encapsulation would have taken place at all). The results were summarized in Table 1.

**Table 1**

| | Example 1^{a)} | Example 2 ^{a)} | Example 3^{a),b)} | Example 4 | Example 5 |
|---|---|---|---|---|---|
| d10 [µm] | 39 | 1 | - | 1 | 1 |
| d50 [µm] | 55 | 6 | - | 7 | 8 |
| d90 [µm] | 75 | 15 | - | 21 | 18 |
| Free Pesticide [%] | 1 | 45 | - | 4 | 8 |

| | | | | | |
|---|---|---|---|---|---|
| a) comparative. b) no microcapsules were formed with the tested codispersant. | | | | | |

In comparative Example 1 without codispersant only microcapsules with a large particle size were prepared. Comparative Example 2 and 3 with codispersant different from the codispersant of formula (I) either a high percentage of pesticide was not encapsulated, or the encapsulation procedure resulted in a cheese-like solid which was not useful. Only by using the codispersant of formula (I) in Examples 4 and 5 small microcapsules as well as a low percentage of free pesticide was achieved.

## Claims

1. An aqueous composition comprising in the aqueous phase
- microcapsules, which comprise a shell and a core, where the core contains a pesticide;
- a sulfonate selected from lignosulfonate, naphthalene sulfonate formaldehyde condensate, or mixtures thereof; and
- a codispersant of the formula (I)
R¹-O-(CₙH₂ₙO)ₓ-(CₘH₂ₘO)_{y}-X (I)
in which
R¹ is a C₆-C₁₈ unit;
X is -P(O)(R^{a})(OH), -CH₂-CH₂-PO₃H₂, -CH₂-CH₂-CO₂H, -SO₃H, -CH₂-CH₂-CH₂-SO₃H, or salts thereof;
R^{a} is R¹-O-(CₙH₂ₙO)ₓ-(CₘH₂ₘO)_{y}- or -OH;
n, m independently of one another are a value of from 2 to 6;
x, y independently of one another are a value of from 0 to 100; and
x+y gives a value of from 1 to 100.

2. The composition according to claim 1, where the composition comprises 0.1 to 5 wt% of the sulfonate.

3. The composition according to any of claims 1 to 2, where the sulfonate is lignosulfonate.

4. The composition according to any of claims 1 to 3, where R¹ is C₆-C₁₈ alkyl.

5. The composition according to any of claims 1 to 4, where X is -P(O)(R^{a})(OH), -SO₃H, or salts thereof.

6. The composition according to any of claims 1 to 5, where the composition comprises 0.1 to 5 wt% of the codispersant.

7. The composition according to any of claims 1 to 6, where the shell of the microcapsule is a polyurea shell.

8. The composition according to any of claims 1 to 7, where the weight ratio of the sulfonate to the codispersant is from 4:1 to 1:4.

9. The composition according to any of claims 1 to 8, where the microcapsules have an average particle size D₅₀ of 1 to 20 µm.

10. The composition according to any of claims 1 to 9, where the pesticide is soluble in water up to 10 g/l.

11. The composition according to any of claims 1 to 10, where n and m are independently of one another are a value of from 2 or 3; x and y are independently of one another are a value of from 0 to 50; and x+y gives a value of from 5 to 50.

12. A method of preparing the composition according to any of claims 1 to 11 by synthesizing the microcapsules in the aqueous phase in the presence of the sulfonate and the codispersant.

13. The method according to claim 12, where the microcapsules are synthesized by polycondensation of a polyisocyanate and a polyamine.

14. The method according to claim 12 or 13, where the aqueous phase comprises in emulsified form a water-immiscible solvent.

15. A method of controlling phytopathogenic fungi and/or undesired plant growth and/or undesired insect or mite attack and/or for regulating the growth of plants, wherein the composition as defined in any of claims 1 to 11 is allowed to act on the respective pests, their environment or the crop plants to be protected from the respective pest, on the soil and/or on undesired plants and/or on the crop plants and/or on their environment.

## Patentansprüche

1. Wässrige Zusammensetzung, umfassend, in der wässrigen Phase,
- Mikrokapseln, die eine Hülle und einen Kern umfassen, wobei der Kern ein Pestizid enthält,
- ein Sulfonat ausgewählt aus Lignosulfonat, Naphthalinsulfonat-Formaldehyd-Kondensat oder Mischungen davon und
- ein Codispersionsmittel der Formel (I),
R¹-O-(CₙH₂ₙO)ₓ-(CₘH₂ₘO)_{y}-X (I),
in welcher
R¹ für eine C₆-C₁₈-Einheit steht,
X für -P(O)(R^{a})(OH), -CH₂-CH₂-PO₃H₂, -CH₂-CH₂-CO₂H, -SO₃H, -CH₂-CH₂-CH₂-SO₃H oder Salze davon steht,
R^{a} für R¹-O-(CₙH₂ₙO)ₓ-(CₘH₂ₘO)_{y}- oder -OH steht,
n, m unabhängig voneinander für einen Wert von 2 bis 6 stehen,
x, y unabhängig voneinander für einen Wert von 0 bis 100 stehen und
x+y einen Wert von 1 bis 100 ergibt.

2. Zusammensetzung nach Anspruch 1, wobei die Zusammensetzung 0,1 bis 5 Gew.-% des Sulfonats umfasst.

3. Zusammensetzung nach einem der Ansprüche 1 bis 2, wobei es sich bei dem Sulfonat um Lignosulfonat handelt.

4. Zusammensetzung nach einem der Ansprüche 1 bis 3, wobei R¹ für C₆-C₁₈-Alkyl steht.

5. Zusammensetzung nach einem der Ansprüche 1 bis 4, wobei X für -P(O)(R^{a})(OH)-, -SO₃H oder Salze davon steht.

6. Zusammensetzung nach einem der Ansprüche 1 bis 5, wobei die Zusammensetzung 0,1 bis 5 Gew.-% des Codispersionsmittels umfasst.

7. Zusammensetzung nach einem der Ansprüche 1 bis 6, wobei die Hülle der Mikrokapsel eine Polyharnstoffhülle ist.

8. Zusammensetzung nach einem der Ansprüche 1 bis 7, wobei das Gewichtsverhältnis vom Sulfonat zum Codispersionsmittel 4:1 bis 1:4 beträgt.

9. Zusammensetzung nach einem der Ansprüche 1 bis 8, wobei die Mikrokapseln eine durchschnittliche Teilchengröße D₅₀ von 1 bis 20 µm aufweisen.

10. Zusammensetzung nach einem der Ansprüche 1 bis 9, wobei das Pestizid bis zu 10 g/l in Wasser löslich ist.

11. Zusammensetzung nach einem der Ansprüche 1 bis 10, wobei n und m unabhängig voneinander für einen Wert von 2 oder 3 stehen, x und y unabhängig voneinander für einen Wert von 0 bis 50 stehen und x+y einen Wert von 5 bis 50 ergibt.

12. Verfahren zur Herstellung der Zusammensetzung nach einem der Ansprüche 1 bis 11 durch Synthetisieren der Mikrokapseln in der wässrigen Phase in Gegenwart des Sulfonats und des Codispersionsmittels.

13. Verfahren nach Anspruch 12, wobei die Mikrokapseln durch Polykondensation eines Polyisocyanats mit einem Polyamin synthetisiert werden.

14. Verfahren nach Anspruch 12 oder 13, wobei die wässrige Phase in emulgierter Form ein nicht mit Wasser mischbares Lösungsmittel umfasst.

15. Verfahren zur Bekämpfung von phytopathogenen Pilzen und/oder unerwünschtem Pflanzenwuchs und/oder unerwünschtem Insekten- und Milbenbefall und/oder zum Regulieren des Wachstums von Pflanzen, bei dem man die wie in einem der Ansprüche 1 bis 11 definierte Zusammensetzung auf die jeweiligen Schädlinge, ihren Lebensraum oder die vor dem jeweiligen Schädling zu schützenden Kulturpflanzen, auf den Boden und/oder auf unerwünschte Pflanzen und/oder auf die Kulturpflanzen und/oder auf ihren Lebensraum einwirken lässt.

## Revendications

1. Composition aqueuse comprenant dans la phase aqueuse
- des microcapsules, qui comprennent une enveloppe et un noyau, le noyau contenant un pesticide ;
- un sulfonate choisi parmi un lignosulfonate, un condensat de naphtalène sulfonate et de formaldéhyde ou des mélanges correspondants ; et
- un codispersant de formule (I)
**R¹-O-(CₙH₂ₙO)ₓ-(CₘH₂ₘO)_{y}-X** **(I)**
dans laquelle
R¹ représente un motif C₆₋₁₈ ;
X représente -P(O)(R^{a})(OH), -CH₂-CH₂-PO₃H₂, -CH₂-CH₂-CO₂H, -SO₃H, -CH₂-CH₂-CH₂-SO₃H ou des sels correspondants ;
R^{a} représente R¹-O-(CₙH₂ₙO)ₓ-(CₘH₂ₘO)_{y}- ou -OH ;
n, m indépendamment l'un de l'autre ont une valeur de 2 jusqu'à 6 ;
x, y indépendamment l'un de l'autre ont une valeur de 0 jusqu'à 100 ; et
x + y donne une valeur de 1 jusqu'à 100.

2. Composition selon la revendication 1, la composition comprenant 0,1 jusqu'à 5% en poids du sulfonate.

3. Composition selon l'une quelconque des revendications 1 à 2, le sulfonate étant un lignosulfonate.

4. Composition selon l'une quelconque des revendications 1 à 3, R¹ représentant C₆₋₁₈-alkyle.

5. Composition selon l'une quelconque des revendications 1 à 4, X représentant -P(O)(R^{a})(OH), -SO₃H ou des sels correspondants.

6. Composition selon l'une quelconque des revendications 1 à 5, la composition comprenant 0,1 jusqu'à 5% en poids du codispersant.

7. Composition selon l'une quelconque des revendications 1 à 6, l'enveloppe de la microcapsule étant une enveloppe de polyurée.

8. Composition selon l'une quelconque des revendications 1 à 7, le rapport molaire du sulfonate au codispersant étant de 4:1 jusqu'à 1:4.

9. Composition selon l'une quelconque des revendications 1 à 8, les microcapsules possédant une grosseur moyenne de particule D₅₀ de 1 jusqu'à 20 µm.

10. Composition selon l'une quelconque des revendications 1 à 9, le pesticide étant soluble dans l'eau jusqu'à 10 g/l.

11. Composition selon l'une quelconque des revendications 1 à 10, n et m indépendamment l'un de l'autre ayant une valeur de 2 ou 3 ; x et y indépendamment l'un de l'autre ayant une valeur de 0 jusqu'à 50 ; et x + y donnant une valeur de 5 jusqu'à 50.

12. Procédé de préparation de la composition selon l'une quelconque des revendications 1 à 11 par la synthèse des microcapsules dans la phase aqueuse en présence du sulfonate et du codisperant.

13. Procédé selon la revendication 12, les microcapsules étant synthétisées par polycondensation d'un polyisocyanate et d'une polyamine.

14. Procédé selon la revendication 12 ou 13, la phase aqueuse comprenant, sous forme émulsifiée, un solvant non miscible à l'eau.

15. Procédé pour contrôler des champignons pathogènes des plantes et/ou la croissance de plante indésirable et/ou l'attaque par des acariens ou des insectes indésirables et/ou pour la régulation de la croissance de plantes, la composition telle que définie selon l'une quelconque des revendications 1 à 11 étant laissée à agir sur les nuisibles respectifs, sur leur environnement ou sur les plantes de culture qui sont à protéger contre les nuisibles respectifs, sur le sol et/ou sur les plantes indésirables et/ou sur les plantes de culture et/ou sur leur environnement.
